# EUROPÄISCHE PATENTANMELDUNG

(11) **EP 2 148 127 A2**
(43) Veröffentlichungstag der Anmeldung: **27.01.2010**
(21) Anmeldenummer: 09006295.1
(22) Anmeldetag: 08.05.2009
(51) Int. Cl.: F17C 13/08, F17C 5/06

(54) **Speichervorrichtung für komprimierte Medien und Verfahren zum Betanken von Fahrzeugen**

(30) Priorität: 24.07.2008 DE 102008034499
(71) Anmelder: Linde AG, 80331 München (DE)
(72) Erfinder: Adler, Robert, 2201 Gerasorf (AT); Stehrlein, Martin, 3451 Rust (AT); Opfermann, Andreas, Dr., 80636 München (DE)
(74) Vertreter: Zahn, Christoph

(57) **Zusammenfassung**

Es wird eine Speichervorrichtung zur Speicherung eines komprimierten Mediums, beispielsweise von Wasserstoff, beschrieben.

Erfindungsgemäß weist die Speichervorrichtung mehrere Speicherbehälter (1) und einen Container (2), in dem die Speicherbehälter (1) angeordnet sind, auf.

Ferner wird ein Verfahren zum Betanken eines Fahrzeuges mit gasförmigem Wasserstoff mittels eines variablen Pilgerschrittverfahrens beschrieben, bei dem der gasförmige Wasserstoff aus einer Speichervorrichtung (2), die wenigstens in zwei, vorzugsweise in vier oder mehr als vier Sektionen (A, B, C und D) unterteilt ist, entnommen und dem zu betankenden Fahrzeug zugeführt wird.

## Beschreibung

Die Erfindung betrifft eine Speichervorrichtung zur Speicherung eines komprimierten Mediums, wie beispielsweise Wasserstoff.

Ferner betrifft die Erfindung ein Verfahren zum Betanken eines Fahrzeuges mit gasförmigem Wasserstoff mittels eines variablen Pilgerschrittverfahrens.

Unter dem Begriff "Fahrzeug" seien nachfolgend alle Arten von Land-, Luft- und Wasser-Fahrzeugen zu verstehen, bei denen eine Betankung mit einem komprimierten Medium, insbesondere mit Wasserstoff, realisierbar ist. Unter dem Begriff "Medium" seien nachfolgend u. a. Gase und Gasgemische zu verstehen.

Die Versorgung von Verbrauchern bzw. Kunden mit komprimierten Medien, wie bspw. die Versorgung von Wasserstoff-Tankstellen mit komprimiertem, gasförmigem Wasserstoff, die Versorgung von Kunden unterschiedlichster Art mit komprimiertem, gasförmigem Stickstoff, etc. wird gegenwärtig dadurch realisiert, dass die komprimierten Medien in Druckgasflaschen, in Flüssigtanks oder mittels sog. Hochdruck-Trailer angeliefert werden. Insbesondere die Versorgung von Wasserstoff-Tankstellen mit komprimiertem, gasförmigem Wasserstoff ist vergleichsweise kostenintensiv. Die Ursache hierfür ist darin begründet, dass der Wasserstoff vor dem Transport verflüssigt, in verflüssigtem Zustand vom Verflüssiger zur Wasserstoff-Tankstelle transportiert und an der Wasserstoff-Tankstelle verdampft und anschließend verdichtet wird. Wünschenswert wäre zwar eine Wasserstoff-Erzeugung unmittelbar vor Ort, jedoch stehen hierfür noch keine in der Praxis mit vernünftigem Aufwand realisierbaren Verfahren zur Verfügung.

Der Transport des verflüssigten Wasserstoffs erfolgt üblicherweise in aufwendig isolierten Speicherbehältern, in denen jedoch aufgrund des unvermeidbaren Wärmeeinfalles aus der Umgebung Abdampfverluste in Kauf genommen werden müssen.

Alternativ hierzu kann ein Transport von komprimiertem, gasförmigem Wasserstoff mittels Hochdruck-Trailer erfolgen. Dabei wird der Wasserstoff in mehreren, zylindrischen Speicherbehältern, die vorzugsweise dauerhaft auf einem Auflieger montiert sind, transportiert. Die Lagerung des Wasserstoffs in diesen Speicherbehältern erfolgt bei einem Druck zwischen 200 und 300 bar. Das Speichervolumen derartiger Hochdruck-Trailer beträgt bei den vorgenannten Drücken zwischen 3000 und 5000 Nm³. Von Nachteil bei dieser Art des Wasserstoffs-Transports ist jedoch, dass mit einem Lastwagen bzw. Trailer, der ein Gesamtgewicht von 40 Tonnen aufweist, lediglich eine Wasserstoffmenge zwischen 300 und 500 kg transportiert werden kann.

Aufgabe der vorliegenden Erfindung ist es, eine gattungsgemäße Speichervorrichtung zur Speicherung eines komprimierten Mediums, wie beipielsweise Wasserstoff anzugeben, die die vorgenannten Probleme vermeidet. Ferner liegt der vorliegenden Erfindung die Aufgabe zugrunde, ein gattungsgemäßes Verfahren zum Betanken eines Fahrzeuges mit gasförmigem Wasserstoff mittels eines variablen Pilgerschrittverfahrens anzugeben.

Zur Lösung dieser Aufgabe wird eine gattungsgemäße Speichervorrichtung vorgeschlagen, die dadurch gekennzeichnet ist, dass sie mehrere Speicherbehälter und einen Container, in dem die Speicherbehälter angeordnet sind, aufweist.

Verfahrensseitig wird die gestellte Aufgabe dadurch gelöst, dass der gasförmige Wasserstoff aus einer erfindungsgemäß ausgelegten Speichervorrichtung, die wenigstens in zwei, vorzugsweise in vier oder mehr als vier Sektionen unterteilt ist, entnommen und dem zu betankenden Fahrzeug zugeführt wird.

Weitere vorteilhafte Ausgestaltungen der erfindungsgemäßen Speichervorrichtung zur Speicherung eines komprimierten Mediums sowie des erfindungsgemäßen Verfahrens zum Betanken eines Fahrzeuges mit gasförmigem Wasserstoff mittels eines variablen Pilgerschrittverfahrens, die Gegenstände der abhängigen Patentansprüche darstellen, sind **dadurch gekennzeichnet, dass**
- innerhalb eines Containers wenigstens neun Speicherbehälter angeordnet sind, wobei die wenigstens neun Speicherbehälter vorzugsweise in vier Sektionen unterteilt sind - hierbei sie die Begriffsfolge "in vier Sektionen unterteilt" so zu verstehen, dass die wenigstens neun Speicherbehälter leitungsmäßig derart miteinander verbunden sind, dass innerhalb eines Containers eine Speicherung auf vier unterschiedlichen Druckniveaus erfolgen kann,
- der Container und/oder die Speicherbehälter eine Brandschutzisolierung aufweisen,
- die Speicherbehälter zumindest teilweise aus einem Kohlefasermaterial bestehen,
- die Speicherbehälter zur Aufnahme eines auf Drücke bis 1000 bar komprimierten Mediums ausgebildet sind,
- der Container wenigstens einen Gassensor und/oder Mittel zum Entlüften des Containerinnenraumes aufweist,
- der Container für den Transport auf einem Transportfahrzeug, insbesondere einem Lastwagen oder einem Eisenbahnwagon, ausgebildet ist.
- der Container Mittel zum Aufstellen, wobei diese vorzugsweise höhenverstellbar ausgebildet sind, aufweist, wobei die Aufstellhilfe vorzugsweise derart ausgeführt ist, dass sie auf den beiden Längsseiten des Containers so weit nach außen gezogen werden kann, dass das Transportfahrzeug nach einem Absenken mittels seiner Luftfederung unter dem Container herausfahren kann,
- der Container Mittel zum Erstellen einer leitenden Verbindung mit dem Potenzialausgleich seines Aufstellungsortes, beispielsweise einer Wasserstoff-Tankstelle, aufweist,
- der dem zu betankenden Fahrzeug zugeführte Wasserstoff vor der Zuführung in das zu betankende Fahrzeug entspannt wird,
- die bei der Entspannung des Wasserstoffs gewonnene Wellen- und Kälteleistung innerhalb des Betankungsverfahrens genutzt wird und
- eine Zwischenspeicherung des dem zu betankenden Fahrzeug zugeführten Wasserstoffs erfolgt.

Die erfindungsgemäße Speichervorrichtung besteht nunmehr aus einem Container, in dem mehrere Speicherbehälter angeordnet sind. Diese weisen vorzugsweise eine zylindrische Form auf. Die gegenwärtige Kohlefasertechnologie ermöglicht es nunmehr, derartige Speicherbehälter mit einem sehr geringen Gewicht zu realisieren. Aufgrund des im Vergleich zu dem bekannten Stand der Technik niedrigeren Gewichts des bzw. der Speicherbehälter erhöht sich das Gewicht des gespeicherten Wasserstoffs bei einem Fahrzeuggesamtgewicht von 40 Tonnen auf 2100 kg.

Ist beabsichtigt, den gasförmigen Wasserstoff für eine Betankung bei einem Druck von 700 bar und einer Temperatur von 15 °C zu nutzen, so ist es zweckmäßig, den Wasserstoff in der erfindungsgemäßen Speichervorrichtung bei einem Druck von ca. 900 bar zu speichern. Werden eine oder mehrere der erfindungsgemäßen Speichervorrichtungen auf einem Lastwagen bzw. Trailer angeordnet, so können bei diesem Druck und einem Gesamtgewicht des Lastwagens bzw. Trailers von 40 Tonnen ca. 2.100 kg Wasserstoff gespeichert und transportiert werden.

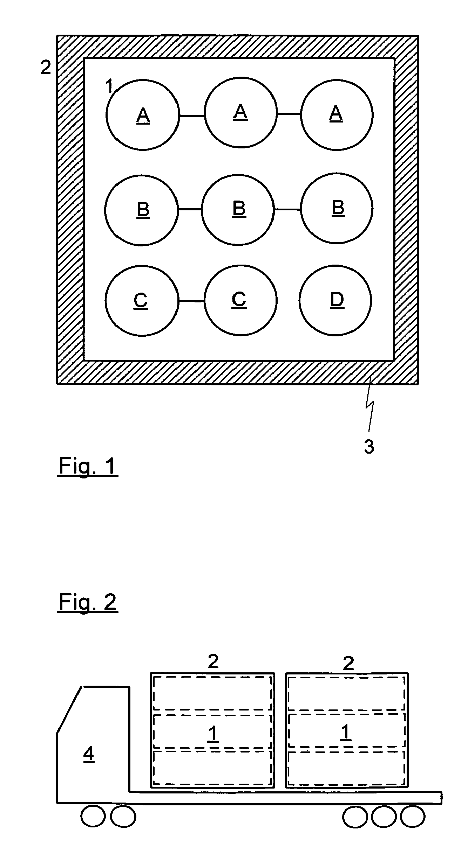

Die erfindungsgemäße Speichervorrichtung zur Speicherung eines komprimierten Mediums, insbesondere von Wasserstoff, sowie weitere vorteilhafte Ausgestaltungen derselben seien nachfolgend anhand der in den Figuren 1 und 2 dargestellten Ausführungsbeispiele näher erläutert.

Die Figur 1 zeigt eine nicht maßstabsgerechte Schnittdarstellung durch eine mögliche Ausführungsform der erfindungsgemäßen Speichervorrichtung. Diese besteht aus einem Container 2, der vorzugsweise eine Brandschutzisolierung 3 aufweist. Innerhalb des Containers 2 sind bei der in der Figur 1 dargestellten Ausführungsform neun Speicherbehälter 1 angeordnet. Das Vorsehen einer Brandschutzisolierung ermöglicht es, den Sicherheitsabstand um einen abgestellten Container - beispielsweise bei einer Wasserstoff-Tankstelle - auf ein Minimum zu reduzieren.

Die neun Speicherbehälter 1 sind nunmehr - entsprechend einer vorteilhaften Ausgestaltung der erfindungsgemäßen Speichervorrichtung - in vier Sektionen unterteilt. Die Begriffsfolge "in vier Sektionen unterteilt" sei hierbei so zu verstehen, dass die neun Speicherbehälter leitungsmäßig derart miteinander verbunden sind, dass innerhalb eines Containers eine Speicherung auf vier unterschiedlichen Druckniveaus erfolgen kann. Alternativ hierzu können auch weniger oder mehr Speicherbehälter vorgesehen und/oder weniger oder mehr Druckniveaus realisiert werden. Die einzelnen Sektionen bzw. die Zugehörigkeit eines einzelnen Speicherbehälters zu einer Sektion sei durch die Buchstaben A, B, C und D gekennzeichnet.

Zusätzlich zu der üblicherweise vorzusehenden Brandschutzisolierung 3 sind ggf. Gassensoren und/oder eine Entlüftungsmöglichkeit bzw. Ventilation zum Entlüften des Containerinnenraumes vorzusehen. Diese ermöglichen das Aufstellen und Betreiben einer derartigen Speichervorrichtung, ohne dass eine Schutzzone um die Speichervorrichtung bzw. den Container 2 eingehalten werden muss.

Ein Container 2 weist vorzugsweise eine Länge von 5 m, eine Breite von 2,5 m und eine Höhe von 2,5 m auf. Werden neun Speicherbehälter 1, die den Innenraum des Containers 2 nahezu vollständig ausfüllen, vorgesehen, könnte ein derartiger Container bei einem Speicherdruck von 900 bar ca. 700 kg Wasserstoff aufnehmen.

Wie anhand der **Figur 2** dargestellt, werden auf einem Transportfahrzeug 4 vorzugsweise zwei oder mehrere Speichervorrichtungen bzw. Container 2 angeordnet. Die in den Containern 2 angeordneten Speicherbehälter 1 sind gestrichelt dargestellt.

Die erfindungsgemäße Speichervorrichtung weiterbildend wird vorgeschlagen, dass die einzelnen Speichervorrichtungen bzw. Container 2 als sog. Wechselcontainer ausgeführt sind. Dies erfordert, dass die Speichervorrichtungen bzw. Container 2 Mittel zum Aufstellen aufweisen, wobei diese vorzugsweise höhenverstellbar ausgebildet sind. Mittels dieser Ausgestaltung können die Container 2 durch den Lastwagen 4 selbst be- und entladen werden, ohne dass hierzu ein Kran erforderlich wäre. Die Aufstellhilfe ist deshalb vorzugsweise derart ausgeführt, dass sie auf den beiden Längsseiten des Containers 2 so weit nach außen gezogen werden kann, dass das Transportfahrzeug nach einem Absenken mittels seiner Luftfederung unter dem Container 2 herausfahren kann (Wechselcontainerprinzip).

Vorteilhafterweise sind sämtliche Befüll- und/oder Entnahmeeinrichtungen bei der erfindungsgemäßen Speichervorrichtung bzw. dem Container 2 beidseitig vorhanden.

Insbesondere die vorbeschriebene Unterteilung der innerhalb des Containers 2 angeordneten Speicherbehälter 1 in mehrere Sektionen ermöglicht eine Entleerung der Speicherbehälter 1 und ein Befüllen eines zu betankenden Fahrzeuges mittels eines variablen Pilgerschrittverfahrens. Derartige Verfahren weisen, verglichen mit herkömmlichen Betankungsverfahren, einen sehr niedrigen Energieverbrauch auf.

Es sei betont, dass die vorbeschriebene, erfindungsgemäße Speichervorrichtung nicht nur für den Transport sowie die (Zwischen)Speicherung von komprimiertem Wasserstoff geeignet ist, sondern gleichermaßen für jedes andere (komprimierbare) Medium.

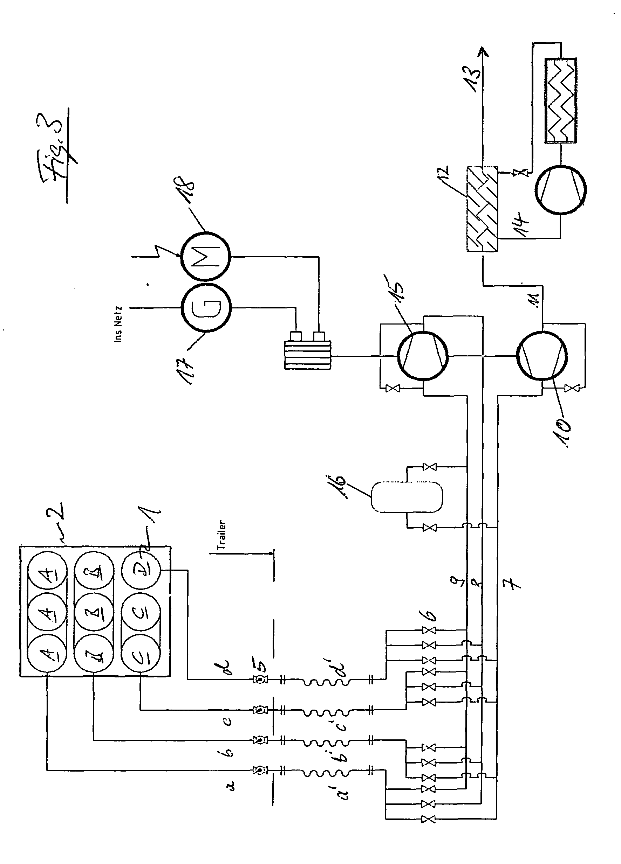

Das erfindungsgemäße Verfahren zum Betanken eines Fahrzeuges mit verdichtetem, gasförmigem Wasserstoff sei nachfolgend anhand des in der Figur 3 dargestellten Ausführungsbeispieles näher erläutert.

In der Figur 3 dargestellt ist einem, bereits anhand der Figur 1 erläuterte erfindungsgemäße Speichervorrichtung, die einen Container 2 sowie neun in ihm angeordnete Speicherbehälter 1 umfasst. Die Speicherbehälter 1 sind, wie bereits ebenfalls anhand der Figur 1 erläutert, in vier Sektionen A bis D unterteilt.

Jede der vorgenannten vier Sektionen A bis D ist über eine separate Leitung a bis d mit dem Leitungsnetz der Wasserstoff-Tankstelle verbindbar. Dies geschieht vorzugsweise mittels geeigneter Schnellkupplungen 5.

Tankstellenseitig setzen sich die vier vorgenannten Leitungen a bis d der erfindungsgemäßen Speichervorrichtung in den Leitungen a' bis d' fort. Jede dieser vier Leitungen a' bis d' teilt sich nunmehr in drei Leitungen auf, die zusammengeführt drei Hauptleitungen 7, 8 und 9 bilden. Aus offensichtlichen Gründen sind in den vorgenannten Leitungen bzw. Leitungsverzweigungen (Sperr)Ventile 6 vorzusehen.

Wie bereits erwähnt, kann der gasförmige Wasserstoff in den Speicherbehältern 1 bei einem Druck bis zu 900 bar gespeichert werden. Üblicherweise erfolgt die Betankung eines Fahrzeuges mit Wasserstoff bei einem Druck von 700 bar und einer Temperatur von 15 °C. Aufgrund der während des Betankungsvorganges auftretenden Erhitzung des Wasserstoffs im Speichertank des zu betankenden Fahrzeuges bis auf eine Temperatur von max. 85 °C, ist ein permanenter Druck von 875 bar in wenigstens einem der Speicherbehälter 1 bzw. in wenigstens einer der vier Sektionen A bis D aufrecht zu halten.

Soll nun ein Fahrzeug mit Wasserstoff betankt werden, weist dessen Speichertank oftmals einen sehr niedrigen Innendruck von nurmehr 50 bar auf. Über die Leitungen bzw. Leitungsabschnitte a, a', 7, 11 und 13 wird das zu betankende Fahrzeug nunmehr mit den drei Speicherbehältern 1 der Sektion A verbunden. Sobald zwischen der Sektion A und dem Fahrzeugstank ein Druckausgleich erreicht ist, wird auf die nächste Sektion B, C oder D umgeschaltet.

Da zu Beginn des Betankungsvorganges zwischen der Sektion A und dem Fahrzeugtank ein großer Druckunterschied besteht, kann an der Expansionsmaschine 10 vergleichsweise viel, zeitweilig sogar zu viel Kälte gewonnen werden. Das erfindungsgemäße Verfahren weiterbildend wird daher vorgeschlagen, einen Kältespeicher in Form eines Kältekreislaufes 14 vorzusehen, der der Speicherung der an der Expansionsmaschine 10 gewonnenen Kälte dient. Mittels dieses Kältekreislaufes 14 kann die Temperatur des während des Betankungsvorganges dem Fahrzeugtank zugeführten Wasserstoffs gemittelt werden. Der Kältespeicher 14 stellt damit sicher, dass am Austritt des Wärmetauschers 12 während des gesamten Betankungsvorganges eine Wasserstoff-Temperatur von ca. -40 °C eingehalten werden kann.

Bei einem durchschnittlichen Betankungsvorgang wird mittels der Expansionsmaschine 10 eine Wellenleistung sowie eine Kälteleistung von jeweils ca. 24 kJ/s gewonnen. Die Wellenleistung kann im Generatorbetrieb - hierzu ist ein Generator 17 vorgesehen - in das Energienetz zurückgespeist werden. In vorteilhafter Weise wird die gewonnene Energie jedoch für den Antrieb des Verdichters 15 genutzt.

Der (zentrale) Verdichter 15 dient dazu, Wasserstoff, der beispielsweise aus der Sektion A entnommen und über die Leitungsabschnitte a, a' und 9 dem Verdichter 15 zugeführt wird, zu verdichten und über die Leitungsabschnitte 8, x' (wobei x' = b', c' und/oder d') und x (wobei x = b, c und/oder d) in wenigstens eine der drei anderen Sektionen B, C und/oder D zu führen. In vorteilhafter Weise wird während des Betankungsvorganges Wasserstoff immer aus der Sektion mit dem geringsten Druck entnommen und mittels des Verdichters 15 in die Sektionen mit dem nächst höheren Druck verdichtet. Das Vorsehen lediglich eines Verdichters 15 erhöht die Energieeffizienz des erfindungsgemäßen Betankungsverfahrens erheblich. Verglichen mit einem Betankungsverfahren, bei dem der zu komprimierende Wasserstoff in flüssiger Form bereitgestellt wird, weist das erfindungsgemäße Betankungsverfahren lediglich ein Zehntel des Energiebedarfes auf.

Expansionsmaschine 10 und Verdichter 15 sind vorzugsweise auf einer gemeinsamen Welle angeordnet, um die in der Expansionsmaschine 10 gewonnene Wellenleistung direkt auf den Verdichter 15 übertragen zu können. Sowohl die Expansionsmaschine 10 als auch der Verdichter 15 sind vorzugsweise mit einem Freilaufventil versehen, so dass jeder Strang zeitweise kurzgeschlossen werden kann.

Die elektrische Spitzenleistung wird während des Expansionsbetriebs erzeugt. Da sie unter Umständen nur vergleichsweise aufwendig in das Stromnetz zurückspeisbar ist, ist es ggf. zweckmäßig, die gewonnene Energie zur Versorgung weiterer Anlagenteilen der Wasserstoff-Tankstelle und/oder zum Wiederaufladen der Akkus von zu betankenden Brennstoffzellen- oder Elektro-Fahrzeugen zu nutzen.

In vorteilhafter Weise ist ein zusätzlicher Hochdruckspeicher 16 vorgesehen. Dieser dient beim Wechsel einer Speichervorrichtungseinheit bzw. eines Containers 2 als Puffer und stellt gleichzeitig sicher, dass ein zu betankendes Fahrzeug auch dann vollständig betankt werden kann, wenn die Speicherbehälter 1 einer erfindungsgemäßen Speichervorrichtung entleert sind.

Mittels des vorbeschriebenen, variablen Pilgerschrittverfahrens bzw. der vorbeschriebenen, variablen Pilgerschrittentleerung kann nun ein Betanken eines Fahrzeuges aus der erfindungsgemäßen Speichervorrichtung bzw. aus deren Speicherbehälter 1 mit einem vergleichsweise niedrigen Energieaufwand realisiert werden.

## Patentansprüche

1. Speichervorrichtung zur Speicherung eines komprimierten Mediums, wie beispielsweise Wasserstoff, **aufweisend** mehrere Speicherbehälter (1) und einen Container (2), in dem die Speicherbehälter (1) angeordnet sind.

2. Speichervorrichtung nach Anspruch 1, **dadurch gekennzeichnet, dass** innerhalb eines Containers (2) wenigstens neun Speicherbehälter (1) angeordnet sind, wobei die wenigstens neun Speicherbehälter (1) vorzugsweise in vier Sektionen (A, B, C und D) unterteilt sind.

3. Speichervorrichtung nach Anspruch 1 oder 2, **dadurch gekennzeichnet, dass** der Container (2) und/oder die Speicherbehälter (1) eine Brandschutzisolierung (3) aufweisen.

4. Speichervorrichtung nach einem der vorhergehenden Ansprüche 1 bis 3, **dadurch gekennzeichnet, dass** die Speicherbehälter (1) zumindest teilweise aus einem Kohlefasermaterial bestehen.

5. Speichervorrichtung nach einem der vorhergehenden Ansprüche 1 bis 4, **dadurch gekennzeichnet, dass** die Speicherbehälter (1) zur Aufnahme eines auf Drücke bis 1000 bar komprimierten Mediums ausgebildet sind.

6. Speichervorrichtung nach einem der vorhergehenden Ansprüche 1 bis 5, **dadurch gekennzeichnet, dass** der Container (2) wenigstens einen Gassensor und/oder Mittel zum Entlüften des Containerinnenraumes aufweist.

7. Speichervorrichtung nach einem der vorhergehenden Ansprüche 1 bis 6, **dadurch gekennzeichnet, dass** der Container (2) für den Transport auf einem Transportfahrzeug, insbesondere einem Lastwagen (4) oder einem Eisenbahnwagon, ausgebildet ist.

8. Speichervorrichtung nach einem der vorhergehenden Ansprüche 1 bis 7, **dadurch gekennzeichnet, dass** der Container (2) Mittel zum Aufstellen, wobei diese vorzugsweise höhenverstellbar ausgebildet sind, aufweist.

9. Speichervorrichtung nach einem der vorhergehenden Ansprüche 1 bis 8, **dadurch gekennzeichnet, dass** der Container (2) Mittel zum Erstellen einer leitenden Verbindung mit dem Potenzialausgleich seines Aufstellungsortes, beispielsweise1 einer Wasserstoff-Tankstelle, aufweist.

10. Transportfahrzeug, insbesondere Lastwagen oder Eisenbahnwagon, **dadurch gekennzeichnet, dass** das Transportfahrzeug zur Aufnahme wenigstens einer Speichervorrichtung nach einem der vorhergehenden Ansprüche ausgelegt ist.

11. Verfahren zum Betanken eines Fahrzeuges mit gasförmigem Wasserstoff mittels eines variablen Pilgerschrittverfahrens, **dadurch gekennzeichnet, dass** der gasförmige Wasserstoff aus einer gemäß einem der vorhergenden Ansprüche 1 bis 9 ausgelegten Speichervorrichtung (2), die wenigstens in zwei, vorzugsweise in vier oder mehr als vier Sektionen (A, B, C und D) unterteilt ist, entnommen und dem zu betankenden Fahrzeug zugeführt wird.

12. Verfahren nach Anspruch 11, **dadurch gekennzeichnet, dass** der dem zu betankenden Fahrzeug zugeführte Wasserstoff vor der Zuführung in das zu betankende Fahrzeug entspannt (10) wird.

13. Verfahren nach Anspruch 12, **dadurch gekennzeichnet, dass** die bei der Entspannung (10) des Wasserstoffs gewonnene Wellen- und Kälteleistung innerhalb des Betankungsverfahrens genutzt wird..

14. Verfahren nach einem der vorhergehenden Ansprüche 11 bis 13, **dadurch gekennzeichnet, dass** eine Zwischenspeicherung (16) des dem zu betankenden Fahrzeug zugeführten Wasserstoffs erfolgt.
